# EUROPÄISCHE PATENTSCHRIFT

(11) **EP 2 174 988 B1**
(45) Veröffentlichungstag und Bekanntmachung des Hinweises auf die Patenterteilung: **22.01.2014**
(21) Anmeldenummer: 08165993.0
(22) Anmeldetag: 07.10.2008
(51) Int. Cl.: C08L 95/00, E04D 5/00, E04D 5/14, C08J 9/06, C08L 23/04

(54) **Geschäumte Kunststoff-Bitumenbahn**
Foamed plastic bitumen track
Bande de bitume en matière plastique expansée

(43) Veröffentlichungstag der Anmeldung: 14.04.2010
(73) Patentinhaber: Sika Technology AG, 6340 Baar (CH)
(72) Erfinder: Bleibler, Alexander, 8406 Winterthur (CH); Slongo, Mario, 1712 Tafers (CH); Aust, Hagen, 53842 Troisdorf (DE)
(74) Vertreter: Sika Patent Attorneys

(56) Entgegenhaltungen:
- EP-A- 0 223 019
- WO-A-2008/023982
- GB-A- 2 029 417
- JP-A- 60 092 380
- US-A1- 2003 054 127
- US-A1- 2004 134 213

## Beschreibung

### Technisches Gebiet

Die Erfindung geht aus von einer Bahn aus einer geschäumten Zusammensetzung enthaltend Bitumen und mindestens ein thermoplastisches Polymer nach dem Oberbegriff des ersten Anspruches.

### Stand der Technik

In Hoch- und Tiefbau wird seit langem Bitumen verwendet, um Untergründe wie Böden oder Dächer mit Dichtmaterialien wie Dichtungsbahnen zu verbinden und dadurch gegen Feuchtigkeit abzudichten. Dieser Bitumen in Form von Bitumengranulat oder Bitumenbahnen wird auf den Untergrund aufgetragen, vollständig geschmolzen und kurz darauf wird das Dichtmaterial auf den geschmolzenen Bitumen aufgebracht und dadurch mit dem Untergrund verbunden. Dieses System weist jedoch den grossen Nachteil auf, dass für das vollständige Schmelzen eine grosse Wärmeleistung erbracht werden muss, was typischerweise den Einsatz einer offenen Flamme erfordert. Dies ist einerseits kostspielig und andererseits kann die schwer kontrollierbare und hohe Wärmeleistung einer solchen offenen Flamme zu Schwelbränden führen. Weiterhin bedingt dieses System, dass nach dem Schmelzen des Bitumens unmittelbar das Dichtmaterial aufgebracht werden muss und ein Begehen des Untergrunds nach dem Schmelzen des Bitumens vor dem Aufbringen des Dichtmaterials nicht möglich ist.

### Darstellung der Erfindung

Aufgabe der vorliegenden Erfindung ist es daher, eine bitumenhaltige Bahn zur Verfügung zu stellen, die die Probleme des Standes der Technik löst.

Erfindungsgemäss wird dies durch die Merkmale des ersten Anspruches erreicht.

Die Vorteile der Erfindung sind unter anderem darin zu sehen, dass die Bahn **B** aus einer geschäumten Zusammensetzung besteht, welche Bitumen und mindestens ein thermoplastisches Polymer enthält. Der Bitumen der Bahn **B** lässt sich dadurch durch eine geringere Wärmeleistung verflüssigen gegenüber dem Bitumen des Stands der Technik, wodurch Energie gespart werden kann, sowie die Gefahr von Schwelbränden reduziert wird.

Ausserdem erlaubt es die Erfindung, die erfindungsgemässe Bahn **B** durch Erhitzen auf der dem Untergrund zugewanden Seite mit dem Untergrund zu verbinden, ohne dass sich die dem Untergrund abgewande Seite verflüssigt. Dies hat den Vorteil, dass der Untergrund vor dem Applizieren des Dichtmaterials auf die Bahn **B** durch die Bahn **B** provisorisch vor Witterung und mechanischen Belastungen wie Begehung geschützt ist. Zusätzlich bleibt der Untergrund in dieser Zeit begehbar, da die Oberfläche der dem Untergrund abgewanden Seite der Bahn **B** nicht erwärmt wurde, dementsprechend nicht verflüssigt wurde und nicht klebrig ist. Dadurch wird zudem eine erhöhte zeitliche Flexibilität beim Abdichten von Hoch- und Tiefbauten erreicht.

Weitere vorteilhafte Ausgestaltungen der Erfindung ergeben sich aus den Unteransprüchen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine Bahn **B** aus einer geschäumten Zusammensetzung umfassend:
Bitumen, wobei der Gehalt an Bitumen 10 - 60 Gewichts-%, bevorzugt 30 - 50 Gewichts-%, insbesondere 40 - 50 Gewichts-%, bezogen auf das Gesamtgewicht der geschäumten Zusammensetzung, beträgt und
mindestens ein thermoplastisches Polymer **P1,** wobei der Gehalt an thermoplastischem Polymer **P1** 20 - 90 Gewichts-%, bevorzugt 30 - 70 Gewichts-%, insbesondere 40 - 60 Gewichts-%, bezogen auf das Gesamtgewicht der geschäumten Zusammensetzung, beträgt.

Das thermoplastische Polymer **P1** ist Polyvinylchlorid, Polyethylen, Polypropylen, Copolymer aus Ethylen und Propylen, chloriertem Polyethylen, chlorsulfoniertem Polyethylen, Copolymer aus Ethylen und Vinylacetat, oder eine Mischung davon.

Vorzugsweise weist die geschäumte Zusammensetzung eine Dichte von 0.2 - 1.2 g/cm³, bevorzugt 0.4 - 0.9 g/cm³, insbesondere bevorzugt 0.5 - 0.8 g/cm³ auf.

Reiner, ungeschäumter Bitumen weist typischerweise eine Dichte von 1.0 - 1.2 g/cm³ auf, eine tiefere Dichte der geschäumten Zusammensetzung ist dahingehend von Vorteil, dass gegenüber reinem Bitumen weniger Wärmeenergie zum Verflüssigen des Bitumens der geschäumten Zusammensetzung nötig ist.

Unter geschäumter Zusammensetzung wird im vorliegenden Dokument ein Gebilde aus kugel- oder polyederförmigen Poren verstanden, welche durch Stege begrenzt werden und ein zusammenhängendes System bilden.

Unter Poren werden im vorliegenden Dokument durch die Herstellung bedingte Hohlräume in und/oder auf der Oberfläche einer Zusammensetzung verstanden, die mit Luft oder anderen zusammensetzungsfremden Stoffen ausgefüllt sind. Die Poren können von blossem Auge erkennbar oder nicht erkennbar sein. Es kann sich um offene Poren, welche mit dem umgebenden Medium in Verbindung stehen, oder um geschlossene Poren, welche in sich abgeschlossen sind und kein Medium eindringen lassen, handeln.

Es ist weiter von Vorteil, dass die geschäumte Zusammensetzung eine Porengrösse von 0.1 - 5 mm, insbesondere 0.2 - 1 mm und/oder ein Porenvolumen von 5 - 90%, insbesondere 10 - 80%, bevorzugt 20 - 50% aufweist. Unter Porenvolumen wird im vorliegenden Dokument der Anteil in Prozent der Gesamtheit der mit Luft oder anderen zusammensetzungsfremden Stoffen ausgefüllten Hohlräume am Volumen der geschäumten Zusammensetzung verstanden.

Das mindestens eine thermoplastische Polymer **P1** ist vorzugsweise ein thermoplastisches Polymer, welches mit Bitumen stabile Gemische bildet. Es ist weiter vorteilhaft, wenn das thermoplastische Polymer **P1** mit Bitumen trockene Granulate bilden kann.

Unter Bitumen wird im vorliegenden Dokument die in der DIN 55 946 definierten, bei schonender Aufarbeitung von Erdölen gewonnenen, dunkelfarbigen, halbfesten bis springharten, schmelzbaren, hochmolekularen Kohlenwasserstoffgemische zu verstehen.

Grundsätzlich sind alle Arten von Bitumen einsetzbar, es kann jedoch vorteilhaft sein Bitumen einzusetzen, der im Hinblick auf die Erweichungstemperatur, insbesondere bei der Erwärmung der Bahn **B** in den später beschriebenen Schritten a) und b), im Hinblick auf die Viskosität bei der Verarbeitungstemperatur sowie im Hinblick auf die Haftung an die Substraten **S1** und/oder **S2** sowie die elastischen Eigenschaften besondere Vorteile bieten. Diese Auswahl oder die mögliche Anpassung von Bitumen oder Bitumenmischungen ist dem Fachmann bekannt.

Zwei bekannte Standardprüfungen für die Klassifizierung und Beurteilung von Bitumen sind die Nadelpenetration sowie der Erweichungspunkt Ring und Kugel, welche auf die rheologischen Eigenschaften des Bitumens zielen.

Bevorzugt wird Bitumen verwendet, der nach DIN 55 946 Teil 1 eine Nadelpenetration nach DIN 52010 von 10 - 300, insbesondere 50 - 200 aufweist.

Es ist weiter von Vorteil, wenn Bitumen verwendet wird, der nach DIN 52011 einen Erweichungspunkt von 30 - 140°C, insbesondere 40 - 70°C aufweist.

Besonders bevorzugt enthält die geschäumte Zusammensetzung eine Stoffmischung auf Basis von Ethylenpolymerisaten und Bitumen wie beispielsweise "Ethylen Copolymer Bitumen" Unter "Ethylen Copolymer Bitumen" (üblicherweise abgekürzt als "ECB") wird eine Klasse von bitumenmodifizierten Polyethylencopolymeren verstanden, bei denen das Bitumen im Sinne eines Gemisches homogen in die Polymermatrix eingelagert ist. Solche Stoffmischungen sind in der Literatur bekannt, beschrieben beispielsweise in EP 0 223 019A1, dessen Offenbarung insbesondere hiermit durch Bezugnahme eingeschlossen wird.

Das Gemisch ist als rieselfähiges Granulat verfügbar. Zur Spezifikation dient DIN 16 729. Im Handel verfügbar ist z.B. das Produkt "Lucobit®" der Lucobit AG, Deutschland.

Die geschäumte Zusammensetzung kann durch verschiedene Verfahren geschäumt werden, wie beispielsweise ein chemisches Treibmittel und/oder ein physikalisches Treibmittel und/oder durch Einblasen von Gas.

Chemische Treibmittel sind organische oder anorganische Verbindungen, welche sich unter Einfluss von Temperatur, Feuchtigkeit oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage Schaumstrukturen zu erzeugen.

Bevorzugt wird die schäumbare Zusammensetzung thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel® von der Firma Akzo Nobel, Niederlande, oder unter dem Handelsnamen Celogen® von der Firma Chemtura Corp., USA.

Die für die Schäumung erforderliche Wärme kann durch externe oder durch interne Wärmequellen, wie einer exothermen chemischen Reaktion, eingebracht werden. Das Treibmittel ist vorzugsweise bei einer Temperatur von 80 °C bis 220 °C, insbesondere von 140 °C bis 200 °C, bevorzugt von 150 °C bis 190 °C, schäumbar. Es ist besonders vorteilhaft, wenn das Treibmittel bei einer Temperatur +/- 20°C des Schmelzpunktes des Bitumen und/oder des thermoplastischen Polymers schäumbar ist.

Die geschäumte Zusammensetzung kann auch durch Einblasen von einem inerten Gas geschäumt werden. Dies ist insbesondere von Vorteil, wenn die Bahn **B** durch Extrusion hergestellt wird.

Es kann weiter von Vorteil sein, wenn die geschäumte Zusammensetzung Additive zur Unterstützung des Schäumprozesses aufweist. Natürlich kann die geschäumte Zusammensetzung weitere Zusatzstoffe organischer und/oder anorganischer Natur enthalten, welche dem Fachmann bekannt sind, wie beispielsweise Füllstoffe oder farbgebende Zusätze.

Die Erfindung umfasst weiterhin die Verwendung einer Bahn **B,** wie sie vorhergehend beschrieben ist, umfassend die Schritte:
a) Applizieren der Bahn **B** auf ein erstes Substrat **S1,** wobei die Oberfläche der dem Substrat **S1** zugewanden Seite der Bahn **B** erwärmt wird;
b) Erwärmen der Oberfläche der dem erstes Substrat **S1** abgewanden Seite der Bahn **B;**
c) Applizieren eines zweiten Substrats **S2** auf die Bahn **B.**

Bei dem Substrat **S1** handelt es sich typischerweise um Dächer oder Böden aus dem Hoch- und Tiefbau, welche man gegen Feuchtigkeit abdichten möchte. Bei dem Substrat **S1** handelt es sich beispielsweise um Holz, Metall, Beton, Gips, Kunststoff, Bitumen oder Wärmedämmmittel wie geschäumtes Polystyrol, geschäumtes Polyurethan, Mineralwolle oder geschäumtes Glas (Foamglas).

Bei dem Substrat **S2** handelt es sich typischerweise um Dichtungsmaterial, insbesondere Dichtungsbahnen. Beim Substrat **S2** kann es sich um Ethylen-Copolymer Bitumen (ECB) oder Kunststoff, insbesondere bitumenverträglichen Kunststoff, bevorzugt weichmacherfreies oder mit einem polymeren Weichmacher weichgemachtes Polyvinylchlorid oder chlorsulfoniertes Polyethylen oder Thermoplastische Polyolefine (TPO) oder um Ethylen-Propylen-Dien-Kautschuk (EPDM) handeln.

Unter bitumenverträglichem Kunststoff wird in diesem Dokument typischerweise Kunststoff verstanden, in welchen Bitumen nur wenig oder gar nicht eindringt oder auch Kunststoff, der frei von Weichmachern ist. Weichmacher können in den Bitumen migrieren, wodurch der Kunststoff verspröden oder sonst in seinen Eigenschaften beeinträchtigt werden kann. Das Eindringen von Bitumen in Kunststoff kann zu Verfärbung des Kunststoffs führen, was zum Beispiel bei einer sichtbaren Abdichtung als Nachteil von derartigen Abdichtungen gewertet wird.

Um die erwähnten Nachteile mit nicht-bitumenverträglichem Kunststoff zu vermeiden, kann es von Vorteil sein, als Substrat **S2** einen mehrschichtigen Werkstoff umfassend eine Schicht aus porösem Material und einer Schicht aus einem thermoplastischen Material zu verwenden, wobei das Substrat **S2** mit der Schicht aus porösem Material in Kontakt mit der Bahn **B** ist.

Die Schicht aus porösem Material trennt dadurch den Bitumen der Bahn **B** vom thermoplastischen Material des Substrat **S2** und erlaubt daher auch die Verwendung von nicht-bitumenverträglichem Kunststoff in der Schicht aus thermoplastischen Material des Substrat **S2.**

Als poröses Material des Substrat **S2** eignet sich insbesondere ein Faserwerkstoff. Unter Faserwerkstoff ist im vorliegenden Dokument ein Werkstoff zu verstehen, welcher aus Fasern aufgebaut ist. Die Fasern umfassen oder bestehen aus organischem oder synthetischem Material. Insbesondere handelt es sich um Zellulose-, Baumwollfasern, Proteinfasern oder um synthetische Fasern. Als synthetische Fasern sind vor allem bevorzugt Fasern aus Polyester oder aus einem Homo- oder Copolymeren von Ethylen und/oder Propylen oder aus Viskose zu nennen. Die Fasern können hierbei Kurzfasern oder Langfasern, gesponnene, gewebte oder ungewebte Fasern oder Filamente sein. Weiterhin können die Fasern gerichtete oder gestreckte Fasern sein. Weiterhin kann es vorteilhaft sein, unterschiedliche Fasern, sowohl in Geometrie als auch Zusammensetzung, miteinander zu verwenden.

Weiterhin umfasst der Faserwerkstoff Hohlräume. Diese Hohlräume werden durch geeignete Herstellverfahren aufgebaut und können das Eindringen von Bitumen erlauben, es ist jedoch vorteilhaft, wenn der Bitumen den Faserwerkstoff in seiner Dicke nicht zu durchdringen vermag, dass der Bitumen vom thermoplastischen Material des Substrat **S2** getrennt wird.

Der aus Fasern aufgebaute Körper kann auf die verschiedensten dem Fachmann bekannten Verfahren hergestellt werden.

Der Faserwerkstoff kann ein lockereres Material aus Spinnfasern oder Filamenten sein, deren Zusammenhalt im Allgemeinen durch die den Fasern eigene Haftung gegeben ist. Hierbei können die Einzelfasern eine Vorzugsrichtung aufweisen oder ungerichtet sein. Der aus Fasern aufgebauter Körper kann mechanisch verfestigt werden durch Vernadeln, Vermaschen oder durch Verwirbeln mittels scharfer Wasserstrahlen.

Besonders bevorzugt als Faserwerkstoff ist ein Filz oder Vlies.

Als thermoplastisches Material des Substrat **S2** eignet sich insbesondere Polyvinylchlodrid (PVC), Thermoplastische Polyolefine (TPO), Ethylen-Propylen-Dien-Kautschuk (EPDM), Weich-PVC mit inneren und äusseren Weichmachern, Polyethylen, chlorsulfoniertes Polyethylen, Polypropylen oder homogener oder verstärktes Ethylen-Copolymer Bitumen.

Das Applizieren der Bahn **B** auf das Substrat **S1** erfolgt typischerweise durch Abrollen der Bahn **B** auf dem Substrat **S1,** wobei die Oberfläche der dem Substrat **S1** zugewanden Seite der Bahn **B** erwärmt wird. Durch das Verflüssigen und/oder das Herausfliessen des Bitumens auf der Oberfläche der dem Substrat **S1** zugewanden Seite der Bahn **B** kann sich die Bahn **B** mit dem Substrat **S1** verbinden. Dies hat den Vorteil, dass das Substrat **S1** vor dem Applizieren des zweiten Substrats **S2** auf die Bahn **B** durch die Bahn **B** vor mechanischen Belastungen wie Begehung und Witterung, insbesondere UV-Strahlung, Eindringen von Feuchtigkeit durch Regen oder Tau und Temperaturschwankungen geschützt ist. Zusätzlich bleibt das Substrat **S1** in dieser Zeit begehbar, da die Oberfläche der dem Substrat **S1** abgewanden Seite der Bahn **B** nicht erwärmt wurde und dementsprechend nicht verflüssigt wurde und nicht klebrig ist. Weiter verhindert der Verbund von Bahn **B und** Substrat **S1** ein Verschieben der Bahn **B** auf dem Substrat **S1,** beispielsweise durch Wind.

Das Erwärmen der Oberfläche der dem erstes Substrat **S1** abgewanden Seite der Bahn **B** erfolgt typischerweise kurz vor Applikation des zweiten Substrats **S2** auf die Bahn **B.** Durch das Verflüssigen und/oder das Herausfliessen des Bitumens verbindet sich die Bahn **B** mit dem Substrat **S2.**

Es ist vorteilhaft, dass die erwärmte Oberfläche der Bahn **B** nach der Erwärmung in direktem Kontakt mit dem ihr zugewanden Substrat **S1** in Schritt b), respektive **S2** in Schritt c), ist und eine innige Verbindung ausbildet. Unter "direktem Kontakt" wird verstanden, dass keine weitere Schicht oder Substanz zwischen zwei Werkstoffen vorliegt und dass die zwei Werkstoffe direkt miteinander verbunden sind, beziehungsweise aneinander haften. Am Übergang zwischen zwei Werkstoffen können die zwei Werkstoffe ineinander vermischt vorliegen.

Durch das Erwärmen der entsprechenden Oberfläche der Bahn **B** kann der sich auf der entsprechenden Seite der Bahn **B** der Bitumen allein oder die geschäumte Zusammensetzung verflüssigen und die Schaumstruktur lokal verloren gehen. Dadurch kann sich das Porenvolumen der Bahn **B** verringern. Vorzugsweise beträgt das Porenvolumens der Bahn **B** nach dem Schritt c) 80 - 0%, bevorzugt 30 - 0%, insbesondere 20 - 0% des Porenvolumens vor dem Schritt a). Dadurch kann insbesondere eine gute Abdichtung des Substrat **S1** sowie ein guter Verbund zwischen **S1** und **S2** durch die Bahn **B** gewährleistet werden.

Es kann von Vorteil sein, dass nach dem Schritt c) sich in der Mitte der Bahn **B** noch geschäumte Zusammensetzung befindet, die durch die Erwärmung nicht verflüssigt wurde und weiterhin eine Schaumstruktur aufweist, welche insbesondere als Wärmedichtung dienen kann.

Die Erwärmung der entsprechenden Oberfläche der Bahn **B** kann auf jegliche Art und Weise erfolgen. Vorzugsweise wird eine Wärmequelle verwendet, insbesondere ein Heissluftgebläse. Es kann jedoch auch eine Flamme oder ein heisses Metall, insbesondere ein heisses Metall, welches die Oberfläche der Bahn **B** über abgestrahlte Wärme erwärmt, verwendet werden.

Es ist besonders vorteilhaft, wenn die erwärmte Oberfläche der Bahn **B** durch heisse Luft, insbesondere durch heisse Luft von einem Heissluftgebläse, erwärmt wird.

Vorteilhafterweise wird die erwärmte Oberfläche der Bahn **B** jeweils für 1 - 30 sec, insbesondere 5 - 20 sec, bevorzugt 10 - 15 sec auf eine Temperatur von 400 C° - 600 C°, insbesondere 450 C° - 550 C°, insbesondere 480 C° - 520 C° erwärmt. Dies hat insbesondere den Vorteil, dass sich die Bahn **B** nicht entzünden kann.

Es ist weiter vorteilhaft, wenn die Bahn **B** bei Temperaturen unter 60°C, insbesondere unter 70°C, bevorzugt unter 80°C nicht klebrig ist, insbesondere das Begehen der Bahn **B** erlaubt oder das einfache Abrollen, falls die Bahn **B** als Rolle vorliegt.

Es ist weiter von Vorteil, wenn es sich bei der Bahn **B** um eine flexible Bahn handelt.

Vorzugsweise weist die Bahn **B** eine Schichtdicke von 0.1 - 10 mm, insbesondere 2 - 8 mm, bevorzugt 4 - 6 mm, auf.

Eine bevorzugte Verwendung der Bahn **B** ist daher eine Verwendung zum Abdichten gegen Feuchtigkeit von Bauten im Hoch- und Tiefbau, insbesondere von Dächern und Böden. Es ist jedoch auch eine Verwendung für Tunnel, Deponien, Wasserrückhaltebecken oder Deiche möglich und kann vorteilhaft sein.

Die Herstellung der Bahn **B** kann in üblicher und bekannter Weise erfolgen, typischerweise durch Kalandrieren, Extrusion, Streichen, insbesondere durch Extrusion, bevorzugt durch eine Breitschlitzdüsenextrusion. Vorzugsweise werden die Bestandteile der geschäumten Zusammensetzung homogenisiert, vorzugsweise bei Temperaturen von 150 - 250°C.

### Beispiele

### Herstellung Bahnen 1-3

Ethylen Copolymer Bitumen (Lucobit® 1235 von Lucobit AG, Deutschland) in Granulatform, Azodicarbonamid als chemisches Treibmittel sowie Zinkoxid als Additiv zur Unterstützung des Schäumprozesses wurden im Extrudierverfahren bei den in Tabelle 1 angegebenen Temperaturen verarbeitet und daraus die Bahnen ***1-3*** extrudiert.

**Tabelle 1: Dichte der geschäumten Zusammensetzung der Bahnen 1, 2 und 3 im Vergleich zu einer nicht-geschäumten Ethylen Copolymer Bitumen-Bahn Ref1.**

| | ***Ref1*** | ***1*** | ***2*** | ***3*** |
|---|---|---|---|---|
| Verarbeitungstemperatur [°C] | n.a. | 160 | 190 | 210 |
| Dichte der Zusammensetzung [g/cm³] | 0.96 | 0.82 | 0.77 | 0.81 |

### Diskussion der Resultate

Das Vergleichsbeispiel ***Ref1*** ist eine kommerziell erhältliche Bahn aus Ethylen Copolymer Bitumen (Lucobit® 1235), wie sie vom Hersteller Lucobit vertrieben wird, während die Bahnen ***1, 2*** und ***3*** aus den vorhergehend genannten Rohstoffen und bei den in Tabelle 1 angegebenen Temperatur hergestellt wurden.

Aus Tabelle 1 ist ersichtlich, dass die Bahnen ***1*** und ***2*** und ***3***, gegenüber dem Vergleichsbeispiel ***Ref1*** eine deutlich geringere Dichte aufweisen.

## Patentansprüche

1. Bahn aus einer geschäumten Zusammensetzung **B** umfassend: Bitumen, wobei der Gehalt an Bitumen 10 - 60 Gewichts-%, bezogen auf das Gesamtgewicht der geschäumten Zusammensetzung, beträgt; mindestens ein thermoplastisches Polymer **P1**, wobei der Gehalt an thermoplastischem Polymer **P1** 20 - 90 Gewichts-%, bezogen auf das Gesamtgewicht der geschäumten Zusammensetzung, beträgt und das thermoplastische Polymer **P1** Polyvinylchlorid, Polyethylen, Polypropylen, Copolymer aus Ethylen und Propylen, chloriertem Polyethylen, chlorsulfoniertem Polyethylen, Copolymer aus Ethylen und Vinylacetat, oder eine Mischung davon, ist.

2. Bahn gemäss Anspruch 1, **dadurch gekennzeichnet, dass** die geschäumte Zusammensetzung eine Dichte von 0.2 - 1.2 g/cm³, bevorzugt 0.4 - 0.9 g/cm³, insbesondere bevorzugt 0.5 - 0.8 g/cm³ aufweist.

3. Bahn gemäss einem der vorhergehenden Ansprüche, **dadurch gekennzeichnet, dass** die geschäumte Zusammensetzung eine Porengrösse von 0.1 - 5 mm und/oder ein Porenvolumen von 5 - 90 % aufweist.

4. Bahn gemäss einem der vorhergehenden Ansprüche, **dadurch gekennzeichnet, dass** der Bitumen eine Nadelpenetration von 10 - 300 und/oder einen Erweichungspunkt von 30 - 140°C aufweist.

5. Bahn gemäss einem der vorhergehenden Ansprüche, **dadurch gekennzeichnet, dass** die Bahn **B** eine Schichtdicke von 0.1 - 10 mm, insbesondere 2 - 8 mm, bevorzugt 4 - 6 mm, aufweist.

6. Verwendung einer Bahn **B** nach einem der Ansprüche 1 bis 5, umfassend die Schritte:
a) Applizieren der Bahn **B** auf ein erstes Substrat **S1,** wobei die Oberfläche der dem Substrat **S1** zugewanden Seite der Bahn **B** erwärmt wird;
b) Erwärmen der Oberfläche der dem erstes Substrat **S1** abgewanden Seite der Bahn **B;**
c) Applizieren eines zweiten Substrats **S2** auf die Bahn **B.**

7. Verwendung nach Anspruch 6, **dadurch gekennzeichnet dass** es ich bei dem Substrat **S1** um Holz, Metall, Beton, Gips, Kunststoff, Bitumen, oder Wärmedämmmittel wie geschäumtes Polystyrol, geschäumtes Polyurethan, Mineralwolle oder geschäumtes Glas (Foamglas) handelt.

8. Verwendung nach Anspruch 6 oder 7, **dadurch gekennzeichnet, dass** es ich bei dem Substrat **S2** um Ethylen-Copolymer Bitumen (ECB) oder Kunststoff, insbesondere bitumenverträglichen Kunststoff, bevorzugt weichmacherfreies oder mit einem polymeren Weichmacher weichgemachtes Polyvinylchlorid oder chlorsulfoniertes Polyethylen oder Thermoplastische Polyolefine (TPO) oder um Ethylen-Propylen-Dien-Kautschuk (EPDM) handelt.

9. Verwendung nach Anspruch 6 oder 7, **dadurch gekennzeichnet dass** es ich bei dem Substrat **S2** um einen mehrschichtigen Werkstoff umfassend eine Schicht aus porösem Material, insbesondere einem Faserwerkstoff und einer Schicht aus einem thermoplastischen Material, vorzugsweise Weich-Polyvinylchlorid, wobei das Substrat **S2** mit der Schicht aus porösem Material in Kontakt mit der Bahn **B** ist.

10. Verwendung nach einem der Ansprüche 6 bis 9, **dadurch gekennzeichnet dass** des Porenvolumens der Bahn **B** nach dem Schritt c) 80 - 0%, bevorzugt 30 - 0%, insbesondere 20 - 0% des Porenvolumens vor dem Schritt a) beträgt.

11. Verwendung nach einem der Ansprüche 6 bis 10, **dadurch gekennzeichnet dass** die erwärmte Oberfläche der Bahn **B** jeweils für 1 - 30 sec, insbesondere 5 - 20 sec, bevorzugt 10 - 15 sec auf eine Temperatur von 400 C° - 600 C°, insbesondere 450 C° - 550 C°, insbesondere 480 C° - 520 C° erwärmt wird.

12. Verwendung nach einem der Ansprüche 6 bis 11, **dadurch gekennzeichnet dass** die erwärmte Oberfläche der Bahn **B** nach der Erwärmung in direktem Kontakt mit dem ihr zugewanden Substrat **S1** in Schritt b), respektive **S2** in Schritt c), ist und eine innige Verbindung ausbildet.

13. Verwendung nach einem der Ansprüche 6 bis 12, **dadurch gekennzeichnet dass** die erwärmte Oberfläche der Bahn **B** durch heisse Luft, insbesondere durch heisse Luft von einem Heissluftgebläse, erwärmt wird.

14. Verwendung nach einem der Ansprüche 6 bis 13, **dadurch gekennzeichnet dass** die Bahn **B** zum Abdichten gegen Feuchtigkeit von Bauten im Hoch- und Tiefbau, insbesondere von Dächern und Böden verwendet wird.

## Claims

1. Sheet made of a foamed composition **B** comprising: bitumen, the bitumen content being 10-60 wt.% based on the total weight of the foamed composition; at least one thermoplastic polymer **P1,** the thermoplastic polymer **P1** content being 20-90 wt.% based on the total weight of the foamed composition and the thermoplastic polymer **P1** being polyvinyl chloride, polyethylene, polypropylene, a copolymer of ethylene and propylene, chlorinated polyethylene, chlorosulfonated polyethylene, a copolymer of ethylene and vinyl acetate, or a mixture thereof.

2. Sheet according to claim 1, **characterised in that** the foamed composition has a density of from 0.2 to 1.2 g/cm³, preferably from 0.4 to 0.9 g/cm³, more preferably from 0.5 to 0.8 g/cm³.

3. Sheet according to any of the preceding claims, **characterised in that** the foamed composition has a pore size of from 0.1 to 5 mm and/or a pore volume of from 5 to 90 %.

4. Sheet according to any of the preceding claims, **characterised in that** the bitumen has a needle penetration of from 10 to 300 and/or a softening point of from 30 to 140 °C.

5. Sheet according to any of the preceding claims, **characterised in that** the sheet B has a layer thickness of from 0.1 to 10 mm, more particularly from 2 to 8 mm, preferably from 4 to 6 mm.

6. Use of a sheet **B** according to any of claims 1 to 5, comprising the steps of:
a) applying the sheet **B** to a first substrate **S1,** wherein the surface of the side of the sheet **B** facing the substrate **S1** is heated;
b) heating the surface of the side of the sheet **B** facing the first substrate **S1;**
c) applying a second substrate **S2** to the sheet **B.**

7. Use according to claim 6, **characterised in that** the substrate **S1** is wood, metal, concrete, gypsum, plastics material, bitumen or an insulating medium such as foamed polystyrene, foamed polyurethane, mineral wool or foamed glass (foam glass).

8. Use according to either claim 6 or claim 7, **characterised in that** the substrate **S2** is ethylene copolymer bitumen (ECB) or plastics material, more particularly bitumen-compatible plastics material, preferably polyvinyl chloride which is plasticiser-free or plasticised using a polymeric plasticiser, or chlorosulfonated polyethylene, or thermoplastic polyolefins (TPO), or ethylene propylene diene monomer (EPDM).

9. Use according to either claim 6 or claim 7, **characterised in that** the substrate **S2** is a multi-layered material comprising a layer of porous material, more particularly a fibrous material, and a layer of thermoplastic material, preferably soft polyvinyl chloride, the substrate **S2** which comprises the layer of porous material being in contact with the sheet **B.**

10. Use according to any of claims 6 to 9, **characterised in that** the pore volume of the sheet **B** after the step c) is 80 to 0 %, preferably 30 to 0 %, more particularly 20 to 0 % of the pore volume before the step a).

11. Use according to any of claims 6 to 10, **characterised in that** the heated surface of the sheet **B** is heated for 1 to 30 sec, more particularly 5 to 20 sec, preferably 10 to 15 sec to a temperature of from 400 °C to 600 °C, more particularly from 450 °C to 550 °C, more particularly from 480 °C to 520 °C in each case.

12. Use according to any of claims 6 to 11, **characterised in that** after the heating, the heated surface of the sheet **B** is in direct contact with the substrate **S1** facing said surface in step b) and the substrate **S2** in step c) and forms a close connection.

13. Use according to any of claims 6 to 12, **characterised in that** the heated surface of the sheet **B** is heated by hot air, more particularly by hot air from a hot air blower.

14. Use according to any of claims 6 to 13, **characterised in that** the sheet **B** is used for sealing against damp in buildings in building construction and civil engineering, more particularly in roofs and floors.

## Revendications

1. Bande formée d'une composition expansée B comprenant : du bitume, dans laquelle la teneur en bitume est de 10 à 60 % en poids par rapport au poids total de la composition expansée ; au moins un polymère thermoplastique P1, dans laquelle la teneur en polymère thermoplastique P1 est de 20 à 90 % en poids par rapport au poids total de la composition expansée et le polymère thermoplastique P1 est le poly(chlorure de vinyle), le polyéthylène, le polypropylène, un copolymère d'éthylène et de propylène, du polyéthylène chloré, du polyéthylène chlorosulfoné, un copolymère d'éthylène et d'acétate de vinyle ou un mélange de ceux-ci.

2. Bande selon la revendication 1, **caractérisée en ce que** la composition expansée présente une masse volumique de 0,2 à 1,2 g/cm³, de préférence de 0,4 à 0,9 g/cm³, mieux encore de 0,5 à 0,8 g/cm³.

3. Bande selon l'une quelconque des revendications précédentes, **caractérisée en ce que** la composition expansée présente une taille de pores de 0,1 à 5 mm et/ou un volume de pores de 5 à 90 %.

4. Bande selon l'une quelconque des revendications précédentes, **caractérisée en ce que** le bitume présente une pénétrabilité à l'aiguille de 10 à 300 et/ou un point de ramollissement de 30 à 140 °C.

5. Bande selon l'une quelconque des revendications précédentes, **caractérisée en ce que** la bande B présente une épaisseur de couche de 0,1 à 10 mm, en particulier de 2 à 8 mm, de préférence de 4 à 6 mm.

6. Utilisation d'une B bande selon l'une quelconque des revendications 1 à 5, comprenant les étapes consistant à :
a) appliquer la bande B sur un premier substrat S1, dans laquelle la surface du côté de la bande B tourné vers le substrat S1 est chauffée ;
b) chauffer la surface du côté de la bande B opposé au premier substrat S1 ; et
c) appliquer un second substrat S2 sur la bande B.

7. Utilisation selon la revendication 6, **caractérisée en ce que** le substrat S1 est formé de bois, de métal, de béton, de gypse, de matière plastique, de bitume ou d'un agent calorifuge, tel que le polystyrène expansé, le polyuréthane expansé, la laine minérale ou le verre mousse (Foamglas).

8. Utilisation selon la revendication 6 ou la revendication 7, **caractérisée en ce que** le substrat S2 est un bitume-copolymère d'éthylène (ECB) ou une matière plastique, en particulier une matière plastique compatible avec le bitume, de préférence du poly(chlorure de vinyle) sans émollient ou ramolli avec un émollient polymère ou encore du polyéthylène chlorosulfoné ou des polyoléfines thermoplastiques (TPO) ou un caoutchouc d'éthylène-propylène-diène (EPDM).

9. Utilisation selon la revendication 6 ou la revendication 7, **caractérisée en ce que** le substrat S2 est un matériau à plusieurs couches comprenant une couche d'un matériau poreux, en particulier d'un matériau fibreux, et une couche d'un matériau thermoplastique, de préférence du poly(chlorure de vinyle) souple, le substrat S2 avec la couche de matériau poreux étant en contact avec la bande B.

10. Utilisation selon l'une quelconque des revendications 6 à 9, **caractérisée en ce que** le volume de pores de la bande B est, après l'étape c), de 80 à 0 %, de préférence de 30 à 0 %, en particulier de 20 à 0 % du volume de pores avant l'étape a).

11. Utilisation selon l'une quelconque des revendications 6 à 10, **caractérisée en ce que** la surface chauffée de la bande B est chauffée respectivement pendant 1 à 30 secondes, en particulier pendant 5 à 20 secondes, de préférence pendant 10 à 15 secondes, à une température de 400 °C à 600 °C, en particulier de 450 °C à 550 °C, tout particulièrement de 480 °C à 520 °C.

12. Utilisation selon l'une quelconque des revendications 6 à 11, **caractérisée en ce que** la surface chauffée de la bande B est, après le chauffage, en contact direct avec le substrat S1 qui est tourné vers lui à l'étape b), respectivement avec le substrat S2 à l'étape c), et forme une liaison intime.

13. Utilisation selon l'une quelconque des revendications 6 à 12, **caractérisée en ce que** la surface chauffée de la bande B est chauffée par de l'air chaud, en particulier par de l'air chaud provenant d'une soufflerie d'air chaud.

14. Utilisation selon l'une quelconque des revendications 6 à 13, **caractérisée en ce que** la bande B est utilisée pour étancher contre l'humidité de bâtiments de superstructures et d'infrastructures, en particulier des toits et des sols.
